# DEMANDE DE BREVET EUROPEEN

(11) **EP 3 944 772 A2**
(43) Date de publication de la demande: **02.02.2022**
(21) Numéro de dépôt: 21188674.2
(22) Date de dépôt: 30.07.2021
(51) Int. Cl.: A23L 9/20, A23C 9/15, A23C 9/154

(54) **CREME**

(30) Priorité: 31.07.2020 FR 2008200
(71) Demandeur: SAVENCIA SA, 78220 Viroflay (FR)
(72) Inventeur: DURAND, Fabien, 24430 Razac sur L'Isle (FR); PADEL, Virginie, 28170 FAVIERES (FR); CIBRARIO, Alice, 78000 Versailles (FR)
(74) Mandataire: Gevers & Orès

(57) **Abrégé**

La présente invention se rapporte au domaine de l'industrie alimentaire ; elle vise plus particulièrement la préparation de produits alimentaires, à savoir une gamme d'analogues de crèmes, composés d'ingrédients végétaux et présentant des propriétés fonctionnelles et organoleptiques proches de celles de produits laitiers.

## Description

La présente invention se rapporte au domaine de l'industrie alimentaire ; elle vise plus particulièrement la préparation de produits alimentaires, à savoir une gamme d'analogues de crèmes, composés d'ingrédients végétaux et présentant des propriétés fonctionnelles et organoleptiques proches de celles de produits laitiers.

Que ce soit par conviction éthique ou pour des raisons nutritionnelles, la demande en produits alimentaires végétariens voire végétaliens est en constante croissance. Il existe toutefois des produits alimentaires dont la fabrication requiert par définition l'utilisation d'ingrédients d'origine animale comme c'est le cas du lait de mammifère pour la préparation de produits laitiers comme le fromage.

La Demanderesse s'est donnée pour objectif la mise au point de produits alimentaires analogues à des produits laitiers à partir de matières premières végétales afin de générer des produits compatibles avec une alimentation végétalienne (« Vegan ») tout en restant dans l'univers organoleptique de produits laitiers de type crème liquide, crème épaisse, crème entière, crème allégée tant sur l'aspect, la texture ou encore le gout.

Les crèmes sont une catégorie de produits laitiers obtenus à partir de lait liquide, milieu colloïdal composé de protéines de taille submicronique, de globules gras, sucres et sels minéraux. Un procédé d'écrémage permet de séparer la phase grasse (crème) de la phase aqueuse (lait écrémé). La crème est potentiellement enrichie de stabilisants ou d'émulsifiants puis soumis à un traitement thermique (pasteurisation ou stérilisation) pour une conservation en frais ou à température ambiante selon le procédé de traitement thermique.

Les analogues laitiers sont définis comme des produits obtenus en mélangeant différents ingrédients tels que des protéines et matières grasses, d'origine laitière ou non et formulés de manière à répondre à un besoin fonctionnel spécifique (Bachman, H.P., 2001, « Cheese analogues : a review », International Dairy Journal, Volume 11, 505-515). Historiquement, ces produits ont plutôt été formulés dans un objectif de réduction de coût, notamment avec les fromages à pizza. Plus récemment, le segment des analogues végétaux visant à reproduire les caractéristiques d'aspect et de goût des différents fromages a connu une forte expansion commerciale, et différents produits sont disponibles sur le marché avec des stratégies de formulation variées. L'univers des crèmes n'échappe pas à cette tendance et déjà plusieurs produits sont commercialisés à travers le monde.

On connaît par exemple les crèmes végétales obtenues en émulsionnant de la matière grasse dans une phase aqueuse contenant des texturants, comme par exemple les produits de marque Superbom^{®}, Sunniva Gryr^{®}, Lima^{®} ou encore Kaslink Aito^{®}. Ces produits ont une faible teneur en protéines (entre 0 et 1%) et leur texturation et leur stabilisation sont assurées par l'utilisation conjointe de matière grasse, de farines et/ou d'amidons et d'additifs de type hydrocolloïdes (amidon modifié, agar, caroube, xanthane, carraghénanes, pectine, etc...) . Des acides (lactique E270, citrique E330, tartrique E334, sorbique E200) peuvent également être utilisés. L'absence de protéines dans ces produits reste un point de différenciation majeur par rapport à des référents laitiers.

Il existe également des produits obtenus à base de graines de soja tels que les références des marques Fior di Natura^{®}, Alpro^{®}, Sojabio^{®} ou Bjorg^{®}. Ces produits sont souvent composés de soja fermenté couplé à l'utilisation d'additifs. On retrouve souvent des notes végétales marquées de type foin, tabac, terreux ; notes organoleptiques caractéristiques du soja.

Il existe également des produits obtenus à base de matières premières végétales ayant subi différents traitements tels que décorticage, traitements thermiques, broyage, fermentation, voire germination. Ces matières premières végétales sont essentiellement des graines telles que le riz (produit de la marque Veganz^{®}, Alpro^{®}), l'avoine (marque Oatly^{®}, Hafer cream de DM Bio^{®} ou Veganz^{®}) et des fruits à coques. Parmi les fruits à coque, la noix de cajou et l'amande sont les plus fréquemment utilisées. On retrouve ainsi les produits à base de cajou sous les marques Forager^{®} et amande sous les marques Soyana^{®} et Ecomil^{®}. Ces produits contiennent le plus souvent des additifs pour texturer ou stabiliser les émulsions.

En conclusion, les analogues de crèmes végétales de l'art antérieur sont le plus souvent
- soit des solutions d'amidon et/ou d'hydrocolloïdes dans lesquelles de la matière grasse est émulsionnée, avec une teneur en protéine très faible (<1g/100g).
- Soit des solutions à base de soja le plus souvent fermentées avec la présence ou non d'additifs
- soit des suspensions de fruits à coques complémentées soit d'additifs soit de protéines végétales avec des teneurs protéiques réduites, de l'ordre de 1-3%.

L'objectif que s'est fixé la Demanderesse est d'obtenir une gamme de crèmes végétales à textures lisses et plus ou moins épaisses à partir de fruits à coques broyés avec une teneur protéique > 3,5%, pouvant avoir un très bon profil nutritionnel, notamment via une teneur limitée en acides gras saturés, et ce sans recourir à l'ajout d'additifs tels que les gommes et amidons modifiés.

Par Crème végétale, on entend un produit formulé avec des matières premières végétales se rapprochant au mieux d'une crème laitière sur le plan de la texture et du profil organoleptique. Dans le reste du document, le terme crème sera utilisé pour décrire ce type de produit avec la possibilité de préciser selon la texture (crème liquide, crème épaisse) ou le mode de conservation (crème UHT longue conservation, crème pasteurisée) recherchés.

L'obtention d'analogues végétaux de produits laitiers pose de nombreux problèmes techniques. Contrairement au lait, qui est un liquide, les matières végétales se présentent sous la forme de matériaux solides cohésifs souvent organisés de manière complexe avec des tissus bien différenciés ayant des fonctions biologiques spécifiques (par exemple germe et endosperme dans une céréale). Il s'avère donc difficile d'obtenir un produit onctueux, lisse et homogène (à l'échelle inférieure au millimètre) en partant de particules végétales de taille supérieure au cm et qui ont tendance à donner des produits pâteux et/ou granuleux.

Il est également difficile d'obtenir un produit ayant une typicité laitière à partir de matières premières végétales, notamment la couleur blanche qui permet de rappeler l'univers de la crème.

Un autre problème est de s'affranchir totalement de matières premières animales, telles que les protéines laitières ou les œufs, dont la fonctionnalité texturante, liante, gélifiante, stabilisante, émulsifiante, foisonnante, etc... pourrait être mise à profit.

Un problème technique proche est d'avoir un produit fini dénué d'additifs tels qu'émulsifiants, gommes et autres hydrocolloïdes (amidon modifié, agar, caroube, xanthane, carraghénanes, pectine, etc...), ingrédients couramment utilisés dans les crèmes vegan pour leur fonctionnalité texturante et stabilisante : les texturants modifient le comportement rhéologique des crèmes, les rendant plus ou moins épaisses, onctueuses, lisses, stables et compatibles avec des applications culinaires (sauce, tarte, pizza, ...). Ils ont également un rôle stabilisant par leur capacité à lier l'eau libre, limitant ainsi les risques de synérèse (exsudation d'eau) et de déphasage sur le produit fini, phénomènes perçus comme un défaut de qualité. Ils minimisent également le risque d'obtenir une texture « farineuse » (granular or grainy structure) en limitant les interactions entre protéines et matières grasses pouvant conduire à la formation d'agrégats de taille perceptible en bouche. Les hydrocolloïdes sont classiquement utilisés, seuls ou en mélange, éventuellement en présence d'émulsifiants, ce qui permet au formulateur d'ajuster le niveau de texture des crèmes tout en garantissant la stabilité dans le temps de cette texture.

Dans le cas d'une crème épaisse, un autre problème technique est d'utiliser majoritairement des huiles fluides plutôt que des matières grasses concrètes, qui sont solides à basse température et confèrent une texture crémeuse et fondante à la crème. De plus, la Demanderesse a observé que l'utilisation d'huiles liquides est susceptible d'augmenter le risque de déphasage, lors d'un stockage prolongé et/ou lors de l'utilisation de la crème en cuisine.

L'utilisation de matières grasses concrètes telles que l'huile de coco, le palme ou encore le beurre de cacao est répandue dans l'univers des analogues de crèmes végétales : par exemple, les produits de la marque Ays Kro^{®}, Dr Oetker^{®}, Forager Project^{®} ou Soyana^{®} contiennent entre 15 et 30% de coprah, matière grasse qui contient plus de 90% d'acides gras saturés (AGS) sur le total des acides gras. Cette quantité et qualité de matière grasse (très concrète) génère une texture proche d'une crème après stockage à une température inférieure ou égale à 10°C : utiliser à la place une huile fluide à cette température conduit à un déficit important de texture qu'il faut combler. Aucun produit végétal commercial sur le marché ne répond à la fois à la contrainte d'utiliser une purée d'amandes sans recourir à des additifs (hydrocolloïdes et/ou acidifiants) ou à des matières grasses concrètes pour structurer et stabiliser la crème.

Il est également difficile d'obtenir une crème végétale qui présente un profil sensoriel de produit laitier et en particulier les notes beurre-crème caractéristiques. Le profil aromatique comporte souvent des notes végétales détectables pouvant ne pas convenir à certains consommateurs à la recherche d'une expérience sensorielle semblable à celle d'un produit laitier.

Grace à une sélection spécifique des matières premières végétales, couplée à une maitrise de la fermentation ainsi que d'un procédé permettant de générer des crèmes plus ou moins texturées, la Demanderesse est parvenue à préparer des produits alimentaires composés de matières premières végétales et qui présentent des qualités organoleptiques reproduisant celles de crèmes laitières sans recourir à l'utilisation d'additif(s), avec une teneur en protéine supérieure à 3,5% et avec d'excellents comportements lors de mises en applications culinaires, parfois même meilleurs que ceux des crèmes laitières. On peut citer par exemple un comportement de texture plus stable lors d'une utilisation à chaud en topping sur des pizzas, des quiches ou des tartes sucrées et ce malgré les changements de température.

Avantageusement, cette sélection de matières premières végétales permet de proposer des produits présentant :
- une teneur significative en protéines et optionnellement en fibres alimentaires
- une faible teneur en AGS,
- des formulations « Clean Label » c'est-à-dire dépourvues d'additif alimentaire, avec des profils nutritionnels potentiellement supérieurs à des équivalents fromagers, en l'occurrence via un Nutri-Score pouvant être A à B. Le Nutri-Score est un outil d'évaluation de la qualité nutritionnelle mis en place en 2016 en France dans le cadre du Plan National Nutrition et Santé. Selon ses caractéristiques nutritionnelles, un produit alimentaire obtient une note Nutri-Score variant de A (produits les plus favorables sur le plan nutritionnel) à E (produits les moins favorables, dont la consommation doit être limitée)
- une compatibilité pour des procédés UHT, et
- une aptitude au stockage longue durée.

L'absence d'additif de type texturant (amidon modifié, agar, caroube, xanthane, carraghénanes, pectine, etc...) dans les formules a également dû être compensée par des ingrédients de type amidon et/ou farine. Cette compensation n'est pas sans conséquence et a entraîné notamment trois nouveaux problèmes techniques :
- Une dégradation organoleptique du produit avec une augmentation des gouts et odeurs indésirables végétales et une perte de blancheur. En effet, outre les notes végétales et colorations classiquement plus marquées sur des ingrédients de type farine ou amidon que sur des texturants de type additifs, les teneurs incorporées pour produire un effet texturant similaire sont nettement plus importantes ce qui empire d'autant les défauts organoleptiques de gout et couleur. Il est alors essentiel de choisir des ingrédients qui permettent de limiter/supprimer ces défauts.
- Une plus grande évolutivité de texture au cours de la durée de vie du produit avec notamment des phénomènes de rétrogradation de l'amidon observés, synonyme de prise en fermeté ou pouvant également générer un dépôt sédimenté au cours de la conservation à 4-6°C.
- Un comportement plus délicat lors d'applications culinaires comme notamment des tests à la cuisson ou des mises en conditions acides.

La présente invention permet également de résoudre la problématique de composition de la plupart des « crèmes » végétales qui ne contiennent que très peu (moins de 1%) de protéines. Les produits selon l'invention contiennent classiquement entre 3,5 et 6% en poids de protéines sans nécessiter l'ajout de concentrat ou d'isolat protéique et ont donc un profil nutritionnel amélioré par rapport aux crèmes végétales de l'art antérieur, avec des notes Nutri-Score de A à D pour les valeurs préférentielles.

Enfin, la présente invention permet de contourner les problématiques de défauts de gout, de couleur et de texture fréquemment retrouvés dans les analogues de crèmes végétales. Contrairement aux produits actuellement présents sur le marché, les produits issus de cette invention sont très proches des équivalents laitiers sur ces 3 critères.

L'obtention de textures lisses, gourmandes et stables pour des produits Vegan à teneur en protéines végétales supérieure à 3,5% sans texturant ni stabilisant reste en effet une difficulté technique majeure. La présente invention permet ainsi de répondre à cette problématique via la mise en place de leviers formules et procédés qui génèrent des textures sans défaut de farineux ou de déphasage.

De même, l'aspect blanc d'un produit Vegan avec des teneurs significatives en protéines est une réelle difficulté mais reste pourtant un élément essentiel pour rappeler l'équivalent laitier. On retrouve sur le marché de nombreux produits Vegan aux aspects bien blancs mais basés sur des formulations de type Eau + huile + texturants donc sans protéine. Là encore, afin de contourner cette difficulté technique, des leviers formules (choix des bonnes matières premières) et procédés (étapes de mélange et d'homogénéisation) ont permis de retrouver un aspect identique à une crème laitière.

La présente invention se rapporte ainsi à un produit alimentaire végétal analogue à une crème laitière, comprenant :
- des fruits à coques broyés, de préférence sous forme de purée et de préférence de la purée d'amandes ;
additionnés de :
- au moins une matière grasse végétale ;
- au moins une source d'amidon ;
- au moins un ingrédient naturel acidifiant
- optionnellement, au moins une source de fibres alimentaires végétales ; et
- de l'eau ;
caractérisé en ce qu'il ne contient aucun additif ajouté.

Par « aucun additif ajouté », on entend notamment l'absence d'additifs déclarés dans la liste d'ingrédients dudit produit alimentaire végétal, en particulier sur le pack dudit produit alimentaire végétal.

A titre d'exemple, le sel (pouvant être un ingrédient dudit produit alimentaire végétal) est susceptible de contenir un ou des antimottants, lesquels ne sont pas des additifs ajoutés.

L'additif ajouté est notamment un additif alimentaire, tel que par exemple défini plus bas.

Selon un mode de réalisation, le produit alimentaire végétal a une teneur en protéines supérieure à 3,5%.

Selon un mode de réalisation particulier, le produit alimentaire végétal contient entre 3,5 et 6% de protéines, et plus préférentiellement entre 3,5 et 5%, 4 et 6%, ou 4 et 5% de protéines.

Selon un mode de réalisation particulier, le produit alimentaire végétal ne comprend pas de concentrat et/ou d'isolat protéique, en particulier de concentrat et d'isolat protéique.

Il est en effet à noter que les notes végétales apportées par ces protéines à fort dosage peuvent souvent dégrader le profil organoleptique des produits finis.

Par « concentrat », on entend en particulier un concentrat tel que défini dans le Codex Alimentarius, en particulier un produit contenant plus de 65%, et moins de 90% de protéines.

Par « isolat », on entend en particulier un isolat tel que défini dans le Codex Alimentarius, en particulier un produit contenant 90% ou plus de protéines.

Selon un mode de réalisation, le produit alimentaire végétal ne comprend pas de source de protéines autre que les fruits à coque broyés.

Selon un mode de réalisation, le produit alimentaire végétal ne comprend pas de soja.

En effet, il s'avère que certains consommateurs peuvent avoir des réticences face à des produits contenant du soja.

Par « ingrédient naturel acidifiant », on entend par exemple un ingrédient à base d'agrume, en particulier citron ou pamplemousse.

Selon un mode de réalisation, l'ingrédient naturel acidifiant est un acidifiant de type jus de citron concentré ou jus de pamplemousse concentré ou autres agrumes, en particulier un acidifiant de type jus de citron concentré.

De façon plus spécifique, la présente invention se rapporte à un produit alimentaire végétal comprenant (pourcentages exprimés en poids par rapport au poids total du produit) :
- de 5 à 30%, de préférence entre 10% et 20% de fruits à coques broyés de préférence sous forme de purée. Les particules de ladite purée ont de préférence une taille médiane de particules mesurée par granulométrie laser inférieure ou égale à 50 µm ;
- de 5 à 40% de matière grasse végétale, de préférence de 10 à 25% et encore préférentiellement de 10 à 20% ;
- de 0,5 à 10%, de préférence de 1 à 6%, encore préférentiellement de 1% à 4% d'une source d'amidon telle que farine végétale ou amidon ;
- jusqu'à 30% d'autres matières premières, de préférence végétales, telles que arômes, sucres, ferments, aliments colorants... ;
- jusqu'à 8% de fibres alimentaires végétales ;
- optionnellement ajout d'une source naturelle de calcium de type Lithothamne ; selon la teneur en calcium de la poudre de Lithothamne utilisée, cet ingrédient peut être ajouté à une teneur comprise entre 0,5 et 1% ;
- jusqu'à 3,5% d'acidifiant de type jus de citron concentré ; selon un mode de réalisation particulier qui ne met pas en œuvre de source naturelle de calcium, l'acidifiant peut être utilisé en une teneur moindre qui peut aller jusqu'à 1,8% ;
- jusqu'à 1,5%, de préférence moins de 0,5% et encore préférentiellement moins de 0,2% de sel alimentaire ;
- optionnellement, jusqu'à 1% de ferments ; si le ferment est utilisé pour fermenter tout ou partie du fruit à coque broyé, sa teneur peut être réduite à 0,2% ;
- de l'eau, entre 50% et 75%, préférablement de l'ordre de 70%.

Selon un mode de réalisation, la présente invention se rapporte à un produit alimentaire végétal comprenant (pourcentages exprimés en poids par rapport au poids total du produit) :
- de 5 à 30%, de préférence entre 10% et 20% de fruits à coques broyés de préférence sous forme de purée. Les particules de ladite purée ont de préférence une taille médiane de particules mesurée par granulométrie laser inférieure ou égale à 50 µm ;
- de 5 à 40% de matière grasse végétale, de préférence de 10 à 25% et encore préférentiellement de 10 à 20% ;
- de 0,5 à 10%, de préférence de 1 à 6%, encore préférentiellement de 1% à 4% d'une source d'amidon telle que farine végétale ou amidon ;
- jusqu'à 3,5% d'acidifiant de type jus de citron concentré ; selon un mode de réalisation particulier qui ne met pas en œuvre de source naturelle de calcium, l'acidifiant peut être utilisé en une teneur moindre qui peut aller jusqu'à 1,8% ;
- optionnellement, jusqu'à 1% de ferments ; si le ferment est utilisé pour fermenter tout ou partie du fruit à coque broyé, sa teneur peut être réduite à 0,2% ;
- de l'eau, entre 50% et 75%, préférablement de l'ordre de 70%.

Selon un mode de réalisation, le produit alimentaire végétal comprend :
- de 15% et 30% de fruits à coques broyés de préférence sous forme de purée ;
- de 5 à 25% de matière grasse végétale, de préférence de 10 à 25% et encore préférentiellement de 10 à 20%.

Selon un mode de réalisation, le produit alimentaire végétal comprend :
- de 5 à 20%, de préférence entre 5% et 15% de fruits à coques broyés de préférence sous forme de purée ;
- de 10 à 40% de matière grasse végétale, de préférence de 20 à 40% et encore préférentiellement de 25 à 40%.

Ce produit se caractérise par :
- une teneur en extrait sec comprise entre 20 et 50%, préférentiellement entre 25 et 40% ;
- un pH compris entre 4,0 et 5,2 ;
- des caractéristiques d'un produit laitier frais, en particulier la couleur blanche, l'aspect lisse, la texture très lisse et dispersante en bouche, de liquide à épaisse selon le type de crème voulue et un goût frais à fermenté/acide.

Par texture lisse en bouche, on entend une distribution en taille de particules ayant un diamètre médian inférieur à 50 microns, qui est l'ordre de grandeur des particules qui sont sensoriellement perceptibles en bouche.

La couleur peut si nécessaire être ajustée, par exemple jusqu'à une couleur « crème », notamment par l'ajout d'un aliment colorant.

De préférence, ce produit alimentaire ne contient aucun autre ingrédient que ceux listés ci-dessus et détaillés ci-après ; en particulier, il est dépourvu de tout produit d'origine animale, notamment des protéines, de lactose, et d'additif alimentaire.

Par additif alimentaire, on entend une substance ajoutée aux aliments dans un but technologique : améliorer leur conservation, réduire les phénomènes d'oxydation, colorer les denrées, renforcer leur goût, etc..., il peut s'agir de colorants (incluant des agents blanchissants), de conservateurs, d'anti-oxydants, d'acidifiants et/ou de correcteurs d'acidité, en particulier de bicarbonate de soude ou de tampons pH, et d'agents de texture (stabilisant, émulsifiant, épaississant, gélifiant). L'utilisation d'additifs alimentaires est régie par le Règlement (CE) N° 1333/2008 et ces substances sont identifiées par un code au format « E » suivi d'un numéro.

Le produit alimentaire selon l'invention est également dépourvu de tout ingrédient à base de soja. En outre, le produit alimentaire selon l'invention ne contient pas d'isolat ou de concentrat protéiques qu'ils soient d'origine animale ou végétale, ni de lait de céréales ou de légumineuse.

Fruits à coques : le produit alimentaire selon l'invention est constitué d'une base d'un ou de plusieurs fruits à coques, par exemple choisis parmi : l'amande, la noisette, la noix, la noix de cajou, la noix de pécan, la noix du Brésil, la noix de Macadamia, seul ou en mélange ; préférentiellement, il s'agit d'une purée de fruits à coques, préférentiellement d'amande blanche. On entend par purée une préparation de fruits à coques broyés finement sans aucun ajout d'ingrédient, préférentiellement issue d'un procédé de broyage très fin (taille médiane de particules de moins de 50 µm) et réalisé sur des fruits à coques émondés, blanchies et non torréfiés.

Selon un mode de réalisation, le fruit à coque est, ou les fruits à coque comprennent, de l'amande.

L'amande est susceptible de permettre, si nécessaire, l'obtention d'analogues de crème ayant un profil aromatique dénué de notes indésirables, c'est-à-dire notamment de notes n'appartenant pas aux notes du monde des crèmes laitières. Selon un mode de réalisation préféré, le produit alimentaire végétal selon l'invention est préparé avec une purée d'amandes blanchies avec des tailles de particules de préférence inférieure à 50 µm et permet l'obtention de texture lisse et blanche. Le choix de cette matière première est également couplé à un procédé de mélange et de cisaillement qui permet de proposer des textures parfaitement lisses en bouche sans défaut de farineux.

Selon la viscosité souhaitée du produit fini entre par exemple une crème liquide et une crème épaisse, la teneur en purée d'amandes peut être modulée pour réduire ou augmenter l'extrait sec et notamment la teneur en matière grasse et protéines.

Matière grasse végétale : différentes sources de matières grasses végétales peuvent être utilisées : des huiles liquides à 20°C telles que l'huile de colza, l'huile de tournesol, l'huile d'olive, l'huile de pépins de raisin, l'huile de lin, l'huile de chanvre etc... et des matières grasses concrètes (solides à 20°C) telles que coprah, beurre de cacao, beurre de karité, etc... il peut être utilisé un mélange de différentes matières grasses végétales.

Le choix de la ou des matières grasses végétales est dépendant de leur teneur en acides gras saturés, qui impacte le profil nutritionnel du produit fini, ainsi que de leur couleur et de leur profil organoleptique.

Ainsi, les matières grasses sont choisies de telle sorte que la teneur en acides gras saturés des crèmes ne dépasse pas par exemple, si nécessaire, 13%, de préférence 6%, encore préférentiellement 3% en en poids par rapport au poids total de produit fini.

Selon un mode de réalisation préféré, les matières grasses végétales utilisées dans le cadre de l'invention sont les huiles végétales fluides, c'est-à-dire des matières grasses liquides à température ambiante (environ 20°C) et ayant donc une très faible teneur en acides gras saturés (inférieure à 15%, de préférence à 10%). Par exemple, la teneur en acides gras saturés est inférieure à 10% pour l'huile de colza, inférieure à 12% pour l'huile de lin et inférieure à 15% pour l'huile de tournesol ; avantageusement et malgré la sensibilité connue des huiles à l'oxydation et les différents traitements thermiques réalisés lors de la préparation du produit (pasteurisation du mix et dosage à chaud), le produit fini dans son emballage est stable dans le temps et aucune note rance n'est perceptible en fin de conservation ; de préférence, l'huile végétale est choisie parmi l'huile de colza, l'huile de tournesol et l'huile d'olive ou leur mélange.

Il est également possible d'utiliser des matières grasses concrètes de type coprah, karité, palme ou cacao mais seront privilégiées pour des crèmes réduites en matière grasse afin d'éviter une teneur en AGS trop importante.

Tout comme pour la purée de fruits à coque, le pourcentage d'utilisation de la matière grasse impacte directement la texture/fermeté du produit fini.

Ferments : ils peuvent être utilisés pour donner du goût et/ou acidifier le mélange, en remplacement d'une partie de l'acidifiant naturel ajouté. Différents ferments peuvent être incorporés à la formulation et sont connus de l'homme du métier. Il peut notamment s'agir de ferments lactiques mésophiles (*Lactococcus lactis ssp lactis* et/ou *cremoris, Lactococcus lactis ssp lactis biovar diactylactis, Leuconostoc lactis* et/ou *Leuconostoc mesenteroides*) ou thermophiles (*Streptococcus thermophilus, Lactobacillus delbrueckii ssp bulgaricus* et/ou *Lacticaseibacillus casei* et/ou *Levilactobacillus brevis* et/ou *Lacticaseibacillus rhamnosus* et/ou *Lacticaseibacillus paracasei*), de ferments de type *Geotrichum candidum* ou *Penicillium camemberti* ou encore *Pediococcus pentosaceus, Pediococcus acidilactici, Lactiplantibacillus plantarum,* et leurs mélanges.

Selon un mode de réalisation, le produit alimentaire végétal comprend :
- des fruits à coques broyés, de préférence sous forme de purée et de préférence de la purée d'amandes ;
additionnés de :
- au moins une matière grasse végétale ;
- au moins une source d'amidon ;
- au moins un ingrédient naturel acidifiant ;
- des ferments ;
- optionnellement, au moins une source de fibres alimentaires végétales ; et
- de l'eau.

De façon plus spécifique, la présente invention se rapporte à un produit alimentaire végétal comprenant (pourcentages exprimés en poids par rapport au poids total du produit) :
- de 5 à 30%, de préférence entre 10% et 20% de fruits à coques broyés de préférence sous forme de purée. Les particules de ladite purée ont de préférence une taille médiane de particules mesurée par granulométrie laser inférieure ou égale à 50 µm ;
- de 5 à 40% de matière grasse végétale, de préférence de 10 à 25% et encore préférentiellement de 10 à 20% ;
- de 0,5 à 10%, de préférence de 1 à 6%, encore préférentiellement de 1 à 4% d'une source d'amidon telle que farine végétale ou amidon ;
- jusqu'à 30% d'autres matières premières, de préférence végétales, telles que arômes, sucres, ferments, aliments colorants... ;
- jusqu'à 8% de fibres alimentaires végétales ;
- optionnellement ajout d'une source naturelle de calcium de type Lithothamne ; selon la teneur en calcium de la poudre de Lithothamne utilisée, cet ingrédient peut être ajouté à une teneur comprise entre 0,5 et 1% ;
- jusqu'à 3,5% d'acidifiant de type jus de citron concentré ; selon un mode de réalisation particulier qui ne met pas en œuvre de source naturelle de calcium, l'acidifiant peut être utilisé en une teneur moindre qui peut aller jusqu'à 1,8% ;
- jusqu'à 1,5%, de préférence moins de 0,5% et encore préférentiellement moins de 0,2% de sel alimentaire ;
- des ferments, à hauteur de 0,01 à 1%, notamment de 0,01 à 0,1 ou 0,2%, en particulier utilisés pour fermenter tout ou partie du fruit à coque broyé ;
- de l'eau, entre 50% et 75%, préférablement de l'ordre de 70%.

Selon un mode de réalisation particulier, les ferments sont choisis parmi *Lactococcus lactis ssp lactis, Lactococcus lactis ssp cremoris, Lactococcus lactis ssp lactis biovar diacetylactis, Leuconostoc lactis, Leuconostoc mesenteroides, Streptococcus thermophilus, Lactobacillus delbrueckii ssp bulgaricus, Lacticaseibacillus casei, Levilactobacillus brevis, Lacticaseibacillus rhamnosus, Lacticaseibacillus paracasei, Pediococcus pentosaceus, Lactiplantibacillus plantarum,* et leurs mélanges.

Les ferments peuvent être ajoutés à différentes étapes du procédé sous la forme d'un levain composé d'une matière première végétale fermentée. Il est également possible d'ajouter directement les ferments concentrés dans le produit refroidi avant dosage.

Différents ferments lactiques peuvent être utilisés, on peut notamment citer les produits commerciaux comme les gammes Danisco^{®} VEGE Cultures (IFF-DuPont N&B), HOLDBAC^{®} YM VEGE (IFF-DuPont N&B), Yoflex^{®} (Chr Hansen) seul ou en combinaison avec LGG^{®} (Chr Hansen) ou BB-12^{®} (Chr Hansen).

L'ajout de ferments dans le produit selon l'invention n'a pas pour effet de le texturer par un phénomène de coagulation par exemple.

Dans le cas de la préparation préalable d'une matrice végétale fermentée, aussi appelée levain, celle-ci peut être obtenue de la manière suivante : un fruit à coque ou un mélange de fruits à coque, sous forme de broyat ou de purée, préférentiellement de purée d'amandes, est additionné d'eau de manière à obtenir un mélange contenant de 5 à 30% de fruits à coque puis traité thermiquement afin d'éliminer les flores indigènes. Ce mélange est ensuite fermenté de manière à obtenir un levain, tel que décrit dans l'exemple 5. Cette base est inoculée avec un ou plusieurs microorganismes, préférentiellement des bactéries lactiques, connues par l'Homme de l'art comme pouvant apporter par fermentation des notes laitières, dont des notes de « frais » et/ou de « crème » et/ou de « beurre » au produit fermenté. Ces cocktails de souches peuvent être composés de une ou plusieurs souches, d'une ou plusieurs espèces parmi les espèces suivantes : *Lactococcus lactis ssp lactis* et/ou *cremoris, Lactococcus lactis ssp lactis biovar diacetylactis, Leuconostoc lactis* et/ou *Leuconostoc mesenteroides, Streptococcus thermophilus, Lactobacillus delbrueckii ssp bulgaricus, Lacticaseibacillus casei, Levilactobacillus brevis, Lacticaseibacillus rhamnosus, Lacticaseibacillus paracasei, Pediococcus pentosaceus, Lactiplantibacillus plantarum.*

Le mélange est ensuite incubé à une température favorisant la croissance du ou des microorganismes inoculés dans une gamme de température comprise entre 20°C et 45°C. La durée de l'incubation est comprise entre 15h et 48h.

Le levain est ensuite incorporé, par exemple au moment du mélange des matières végétales de la préparation de la crème, à hauteur de 5 à 60% du mélange final.

Source d'amidon : cet ingrédient peut être choisi parmi la farine de riz, la farine de pois chiche, la farine de pois, la farine de féverole, la farine de haricot, la farine de lupin, la farine de lentille, la farine de châtaigne, l'amidon de riz, l'amidon de blé, l'amidon de maïs, l'amidon de tapioca, l'amidon de pomme de terre... de préférence, on utilisera de la farine de riz et/ou de la fécule de pomme de terre ou de manioc. La farine de riz est par exemple prégélatinisée.

De par sa composition riche en amidon (80%), la farine de riz est un ingrédient intéressant pour proposer des produits Clean Label, sans additif. Son aspect blanc et son gout relativement neutre en comparaison avec d'autres farines permet l'obtention de produits très proches en aspect et en gout d'une crème laitière. Enfin, l'absence de gluten et sa non-allergénicité sont des propriétés intéressantes.

Pour les mêmes raisons, la fécule de pomme de terre ou de manioc est un ingrédient d'intérêt pour proposer des textures lisses et fondantes sans fort impact sur la couleur et le gout.

Outre la viscosité à chaud et les propriétés organoleptiques, un autre critère qui peut être pris en compte pour le choix des références de farine de riz et/ou de fécule repose sur les différences de rétrogradation observées. La rétrogradation est un phénomène de recristallisation de l'amidon (composé de chaînes d'amylopectine et d'amylose) au cours de la conservation qui conduit à un durcissement progressif du produit, dont la texture devient moins souple et significativement plus ferme, ce qui peut alors générer des produits ne correspondant plus à l'univers d'une crème.

Plusieurs références de farine et amidon ont ainsi pu être testées et ont clairement montré des différences significatives de comportement au cours du vieillissement des produits. Cette différence peut venir de l'origine du produit, de sa composition, ou du procédé de préparation utilisé par le fournisseur. Le choix du type, de l'origine et de la référence des sources d'amidon peut avoir des impacts sur la texture et le goût du produit que l'Homme de l'art pourra ajuster selon ses objectifs et préférences, en lien avec la durée de conservation et le mode d'utilisation souhaités pour ce produit.

Les références présentant le moins de rétrogradation au cours du temps sont privilégiées dans le cadre de la présente invention en ce qu'elles permettent d'assurer une stabilité de texture des crèmes au cours de la conservation à 4°C-10°C.

Autres matières premières de préférence végétales : ces matières premières sont distinctes des autres ingrédients végétaux de la recette (purée de fruit à coque, huile, farine ou amidon, fibres) ; elles viennent en compléments des autres ingrédients végétaux listés et elles peuvent être choisies parmi l'ail, fines herbes, herbes de Provence, épices, graines, sucres, aliments colorants, calcium tel qu'un extrait de Lithothamne, fruits, légumes et céréales sous forme d'inclusions, de pâtes ou de purées, arômes (par exemple pour apporter une typicité crème, beurre, lait cuit, lait frais, yaourt, etc.), et notamment parmi calcium tel qu'un extrait de Lithothamne, arômes (par exemple pour apporter une typicité crème, beurre, lait cuit, lait frais, yaourt, etc...).

Fibres alimentaires végétales : les fibres alimentaires utilisables dans le cadre de l'invention sont :
- les fibres solubles faiblement texturantes, telles que fibres de chicorée (inulines et fructooligosaccharides), dextrines résistantes ou tout autre oligosaccharide indigestible d'origine végétale, ayant une faible masse molaire, un goût neutre, une solubilité élevée dans l'eau et une tendance limitée à la recristallisation ; et/ou
- les fibres solubles texturantes et ayant un statut ingrédient telles que les fibres de psyllium, graines de lin ou de chia, ou autre mucilages naturels, les sons d'avoine ou certaines fibres de fruit notamment pommes et agrumes. Ces fibres texturantes sont des polysaccharides qui augmentent la viscosité de la crème et peuvent avoir une action stabilisante sur les gouttes de matière grasse.

Le type de fibres soluble et la quantité mise en œuvre est donc à adapter par l'Homme de l'art en fonction de l'effet désiré.

Il peut être utilisé un mélange de plusieurs fibres alimentaires végétales.

L'utilisation de fibres végétales permet avantageusement de formuler des produits ayant une note A au Nutri-Score.

On pourra notamment ajouter de l'inuline (fibres de chicorée) dans les produits où l'on souhaite une texture fondante et onctueuse.

Le choix de la référence et de l'origine des fibres peut avoir des impacts texture et gout que l'Homme de l'art pourra ajuster selon ses objectifs et préférences.

Acidifiant : de préférence, on choisira le jus de citron concentré. Cet ingrédient permet d'obtenir un pH final du produit entre 4,0 et 5,2 pour renforcer une impression de frais et garantir une stabilité microbiologique tout au long de la durée de vie du produit.

Selon un mode de réalisation, le produit alimentaire végétal comprend :
- des fruits à coques broyés, de préférence sous forme de purée et de préférence de la purée d'amandes ;
additionnés de :
- au moins une matière grasse végétale choisie parmi les huiles végétales liquides à 20°C, en particulier parmi l'huile de colza, l'huile de tournesol, l'huile d'olive, l'huile de pépins de raisin, l'huile de lin, l'huile de chanvre et leurs mélanges, notamment l'huile de colza ;
- au moins une source d'amidon ;
- au moins un ingrédient naturel acidifiant ;
- optionnellement, des ferments ;
- au moins une source de fibres alimentaires végétales, notamment choisie parmi les fibres solubles, telles que fibres de chicorée, dextrines résistantes et psyllium ou autres fibres mucilagineuses telles que des fibres de graines de lin ou de chia, et leurs mélanges; et
- de l'eau.

De façon plus spécifique, la présente invention se rapporte à un produit alimentaire végétal comprenant (pourcentages exprimés en poids par rapport au poids total du produit) :
- de 5 à 30%, de préférence entre 10% et 20% de fruits à coques broyés de préférence sous forme de purée. Les particules de ladite purée ont de préférence une taille médiane de particules mesurée par granulométrie laser inférieure ou égale à 50 µm ;
- de 5 à 40% de matière grasse végétale, de préférence de 10 à 25% et encore préférentiellement de 10 à 20%, choisie parmi les huiles végétales, en particulier parmi l'huile de colza, l'huile de tournesol, l'huile d'olive, l'huile de pépins de raisin, l'huile de lin, l'huile de chanvre et leurs mélanges, notamment l'huile de colza ;
- de 0,5 à 10%, de préférence de 1 à 6%, encore préférentiellement de 1% à 4% d'une source d'amidon telle que farine végétale ou amidon ;
- jusqu'à 30% d'autres matières premières, de préférence végétales, telles que arômes, sucres, ferments, aliments colorants... ;
- de 1 à 8% de fibres alimentaires végétales, notamment choisie parmi les fibres solubles, telles que fibres de chicorée, dextrines résistantes et psyllium ou autres fibres mucilagineuses telles que des fibres de graines de lin ou de chia, et leurs mélanges ;
- optionnellement ajout d'une source naturelle de calcium de type Lithothamne ; selon la teneur en calcium de la poudre de Lithothamne utilisée, cet ingrédient peut être ajouté à une teneur comprise entre 0,5 et 1% ;
- jusqu'à 3,5% d'acidifiant de type jus de citron concentré ; selon un mode de réalisation particulier qui ne met pas en œuvre de source naturelle de calcium, l'acidifiant peut être utilisé en une teneur moindre qui peut aller jusqu'à 1,8% ;
- jusqu'à 1,5%, de préférence moins de 0,5% et encore préférentiellement moins de 0,2% de sel alimentaire ;
- optionnellement, jusqu'à 1% de ferments ; si le ferment est utilisé pour fermenter tout ou partie du fruit à coque broyé, sa teneur peut être réduite à 0,2% ;
- de l'eau, entre 50% et 75%, préférablement de l'ordre de 70%.

Un tel produit alimentaire végétal est susceptible d'avoir une note A ou B, en particulier A, au Nutri-Score.

Selon un mode de réalisation, le produit alimentaire végétal comprend jusqu'à 8% d'acides gras saturés, préférentiellement jusqu'à 5%, encore plus préférentiellement jusqu'à 3%.

Selon un mode de réalisation, le produit alimentaire végétal comprend :
- des fruits à coques broyés, de préférence sous forme de purée et de préférence de la purée d'amandes ;
additionnés de :
- au moins une matière grasse végétale choisie parmi les matières grasses végétales solides à 20°C, en particulier parmi coprah, beurre de cacao, beurre de karité et leurs mélanges, notamment coprah ;
- au moins une source d'amidon ;
- au moins un ingrédient naturel acidifiant ;
- optionnellement, des ferments ;
- optionnellement, au moins une source de fibres alimentaires végétales ; et
- de l'eau.

De façon plus spécifique, la présente invention se rapporte à un produit alimentaire végétal comprenant (pourcentages exprimés en poids par rapport au poids total du produit) :
- de 5 à 30%, de préférence entre 10% et 20% de fruits à coques broyés de préférence sous forme de purée. Les particules de ladite purée ont de préférence une taille médiane de particules mesurée par granulométrie laser inférieure ou égale à 50 µm ;
- de 5 à 40% de matière grasse végétale, de préférence de 10 à 25% et encore préférentiellement de 10 à 20%, choisie parmi les matières grasses végétales concrètes (solides à 20°C), en particulier parmi coprah, beurre de cacao, beurre de karité et leurs mélanges, notamment coprah ;
- de 0,5 à 10%, de préférence de 1 à 6%, encore préférentiellement de 1% à 4% d'une source d'amidon telle que farine végétale ou amidon ;
- jusqu'à 30% d'autres matières premières, de préférence végétales, telles que arômes, sucres, ferments, aliments colorants, ... ;
- jusqu'à 8% de fibres alimentaires végétales ;
- optionnellement ajout d'une source naturelle de calcium de type Lithothamne ; selon la teneur en calcium de la poudre de Lithothamne utilisée, cet ingrédient peut être ajouté à une teneur comprise entre 0,5 et 1% ;
- jusqu'à 3,5% d'acidifiant de type jus de citron concentré ; selon un mode de réalisation particulier qui ne met pas en œuvre de source naturelle de calcium, l'acidifiant peut être utilisé en une teneur moindre qui peut aller jusqu'à 1,8% ;
- jusqu'à 1,5%, de préférence moins de 0,5% et encore préférentiellement moins de 0,2% de sel alimentaire ;
- optionnellement, jusqu'à 1% de ferments ; si le ferment est utilisé pour fermenter tout ou partie du fruit à coque broyé, sa teneur peut être réduite à 0,2% ;
- de l'eau, entre 50% et 75%, préférablement de l'ordre de 70%.

Composition nutritionnelle des crèmes selon l'invention :

**Tableau 1**

| | Energie (kcal) | Protéines (%) | Matières grasses (%) | Dont acides gras saturés (%) | Glucides (%) | Fibres (%) |
|---|---|---|---|---|---|---|
| Gamme | 150-390 | 3-6 | 8-40 | 1-13 | 1-10 | 0,5-8 |

La crème selon l'invention présente les caractéristiques suivantes :
- une couleur la plus blanche possible pour retrouver les codes du laitier ;
- une texture lisse et onctueuse, sans défaut de farineux ; ceci est en particulier obtenu grâce à une granulométrie des particules de la crème qui présentent une taille médiane de particules D50 inférieure à 50 microns, préférentiellement inférieure à 40 microns, plus préférentiellement inférieure à 30 microns ;
- un gout le plus laitier possible, sans gout végétal indésirable.

Le procédé de préparation du produit selon l'invention comprend les étapes suivantes :
A) optionnellement, préparation d'une matière première végétale fermentée par fermentation d'une partie ou de la totalité des fruits à coque broyés, sous leur forme réhydratée et traitée thermiquement préalablement à l'inoculation des ferments ;
   Cette étape a pour objectif d'améliorer le profil organoleptique du produit fini en apportant une typicité laitière de type crème, lait cuit, lait frais ou même yaourt. Le fruit à coque est préférentiellement l'amande.
   Le produit fermenté ainsi obtenu peut être ajouté à l'étape B) ou entre les étapes D) et G).
B) mélange des matières premières, pouvant comprendre la matière première végétale fermentée obtenue à l'étape A), via un cisaillement énergique, et, optionnellement, préchauffage par exemple via injection de vapeur ou dispositif à double paroi ;
   Cette étape permet l'hydratation des ingrédients, notamment des poudres, jusqu'à obtention d'une suspension globalement liquide et homogène ; elle est de préférence conduite à une température comprise entre 20 et 65°C, pendant 1 à 30 minutes, sous agitation modérée à élevée dans un cuiseur ou une cuve agitée ; préférentiellement, cette étape est conduite dans un cuiseur à environ 50°C, pendant 5 minutes avec une agitation modérée.
C) traitement thermique du mélange à une température comprise entre 75°C et 140°C, par exemple par double paroi ou injection de vapeur (en particulier selon le barème de traitement thermique appliqué). Dans le cas d'un produit pasteurisé, le traitement thermique peut être effectué par double paroi ou injection de vapeur pendant 1 à 10min sous cisaillement énergique. Dans le cas d'un produit hors froid, le traitement thermique est effectué de préférence par injection de vapeur pendant notamment quelques secondes sous cisaillement énergique ;
   Cette étape permet la fonctionnalisation des ingrédients et la pasteurisation, voire la stérilisation des matières premières ;
   Le mélange peut ensuite optionnellement être transféré en cuve tampon avec maintien à une température comprise entre 70°C et 85°C.
D) dégazage optionnel et homogénéisation ;
   Cette étape est de préférence conduite entre 50 bars à 600 bars, de préférence 300 à 500 bars. Cette étape permet entre-autre une coloration plus blanche de la base et l'obtention d'une émulsion stable et la réduction de la taille de particules afin de rendre la texture lisse.
E) optionnellement, ajout d'autres matières premières de préférence végétales (ingrédients aromatiques et/ou colorants ou matière première végétale fermentée...) ;
F) dosage du produit fini, notamment dans son emballage ou dans un containeur intermédiaire (fût/outre/poche...) ; le dosage peut être effectué soit à chaud, à une température supérieure à 70°C, de préférence comprise entre 74 et 80°C, soit à froid, de préférence à une température de moins de 10°C ;
G) optionnellement, refroidissement entre 4 et 10°C ;
H) optionnellement dans le cas d'un dosage dans un containeur intermédiaire, ajout d'autres matières premières de préférence végétales (aromatisantes ou colorantes) et/ou de ferments puis dosage à froid du produit dans son emballage final.

L'ajout des ingrédients peut se faire entre 4 et 20°C, préférentiellement à 10°C. Ce mode de réalisation nécessite un choix d'ingrédients aromatiques fortement réduits en charge microbienne pour assurer une stabilité microbiologique au cours de la conservation du produit. L'ajout de ferments permet d'améliorer le profil organoleptique du produit et/ou la stabilité microbienne du produit fini. Le choix des ferments appropriés est connu de l'Homme du métier.

Le tableau 2 ci-dessous reprend les opérations unitaires pouvant être mises en œuvre dans le procédé selon l'invention et indiquées dans les exemples qui suivent :

**Tableau 2**

| **Etape unitaire** | **Fonction** | **Valeurs possibles** | **Valeurs préférentielles (mises en œuvre dans les exemples qui suivent)** |
|---|---|---|---|
| Fermentation matières premières (étape optionnelle) A | Améliorer le profil organoleptique des matières premières en apportant une typicité fromagère/laitière | Fermentation de fruits à coques | Fermentation jus d'amande |
| Réhydratation, Mélange et Préchauffage (optionnel) des ingrédients **B** | Mélanger les différents ingrédients de manière à obtenir une suspension globalement liquide et homogène | Température de mélange entre 20 et 65°C Temps de mélange entre 1min et 30 min Cuiseur, cuve agitée | Cuiseur, mélange 5 min à 50°C |
| Pasteurisation ou upérisation **C** | Fonctionnalisation des ingrédients par le traitement thermique et pasteurisation/upéris ation des matières premières | 75°C à 140°C De 10sec à 10 min | 82°C, 2 min pour un stockage au froid 140°C 10sec pour un stockage hors froid |
| Dégazage (optionnel) et Homogénéisation **D** | Emulsion stable, réduction taille de particules pour texture lisse et enfin, levier de texturation | 50 à 600 bars | 300 - 500 bars |
| Injection d'ingrédients (Etape optionnelle) **E** | Apporter des marquants et/ou une aromatisation | Aucune limite pour l'aromatisation mais préférentiellement de type crème, lait cuit, lait frais ou yaourt Taille des marquants max dépendant des buses de dosages | |
| Dosage (emballage final ou fut) **F** | Doser le produit | Dosage à chaud > 70°C, ou à froid à < 10°C | T°C de dosage à chaud entre 72°C et 85°C, ou à froid à < 10°C |
| Refroidissement **G** (Etape optionnelle) | Refroidir et texturer le produit pour l'obtention d'une base ou d'un produit fini | T°C=4°C - 10°C | T°C de stockage entre 4°C et 10°C |
| Injection d'ingrédients (Etape optionnelle) et dosage dans l'emballage final **H** | Apporter des marquants ou arômes ou un/des ferments pour une aromatisation et/ou améliorer la conservation du produit | T°C = 4 - 20°C | T°C : 10°C |

Selon un autre aspect, l'invention concerne un produit alimentaire végétal susceptible d'être obtenu selon un procédé tel que défini précédemment.

### FIGURES

La figure 1 est une photographie du produit de l'exemple 1 qui est un analogue végétal de crème épaisse à 18% de matière grasse selon l'invention, sur une tarte chaude de fruit.
La figure 2 est une photographie du produit de l'exemple 1 qui est un analogue végétal de crème épaisse à 18% de matière grasse selon l'invention, sur une pizza cuite au four.
La figure 3 est une représentation graphique de l'évaluation sensorielle d'une crème selon l'invention en comparaison avec une crème laitière.
La figure 4 est une représentation graphique des valeurs de de viscosité à 4°C réalisées sur le produit de l'exemple 1, en comparaison à une crème épaisse laitière du commerce.

### EXEMPLES

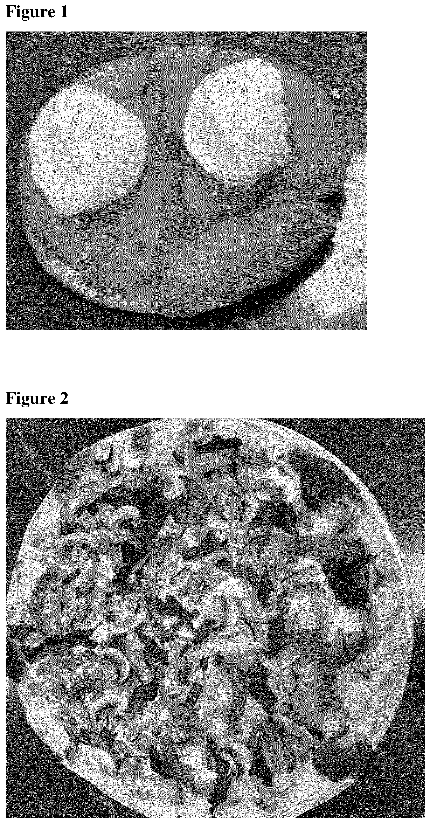

**Exemple 1** (figures 1 et 2) : le produit de type crème est composé de 72% eau, 11% purée d'amandes, 13% beurre de karité, 2,5% fécule de pomme de terre, 1,3% jus de citron concentré, 0,2% arôme naturel.

Le procédé comprend les étapes suivantes du tableau 3 décrit plus haut, à savoir :
(A) - B - C - D- G - H. Les étapes indiquées dans les exemples entre parenthèses sont optionnelles.

Les étapes B) et C) peuvent être notamment réalisées avec cuiseur de type Stephan ou Karl-Schnell via des paramètres de cisaillement connus de l'Homme du métier. Dans ce cas précis, les deux étapes de mélange ont été réalisées à 1500 rpm.

Dans le cas de produit stérilisés, le traitement thermique est réalisé sur un équipement UHT selon les méthodes connues de l'Homme du métier.

On obtient un produit fini ayant l'aspect d'une crème laitière épaisse, avec une texture lisse et onctueuse en bouche, et un aspect bien blanc (voir figures 1 et 2). Le produit a un pH de 4,4 et peut être conservée avant ouverture plusieurs semaines (70 jours) à une température de 4 à 10°C sans montrer d'évolution notable en termes de texture ou de goût. Dans le cas d'un produit stérilisé, le produit peut alors être stocké à température ambiante.

Les valeurs nutritionnelles du produit de l'Exemple 1 sont indiquées ci-dessous :

**Tableau 3**

| Teneur pour 100g | |
|---|---|
| Energie (kcal) | 199 |
| Protéines | 3,2 |
| Glucides | 2,8 |
| Dont sucres | 0,5 |
| Lipides | 19 |
| Dont Acides Gras Saturés | 6,7 |
| Fibres | 0,6 |

**Exemple 2 :** le produit de type crème est composé de 71% eau, 11% purée d'amandes, 13% d'huile de colza, 2,5% fécule de pomme de terre, 1% d'inuline, 1,3% jus de citron concentré, 0,2% arôme naturel.

Le procédé comprend les étapes suivantes du tableau 4 décrit plus haut, à savoir :

(A) -B-C-D-G-H

On obtient un produit fini de Nutri-Score A ayant l'aspect d'une crème laitière semi-épaisse, avec une texture lisse et onctueuse en bouche, et un aspect bien blanc. Le produit a un pH de 4,4 et peut être conservée avant ouverture plusieurs semaines (70 jours) à une température de 4 à 10°C sans montrer d'évolution notable en termes de texture ou de goût.

**Tableau 4**

| Teneur pour 100g | |
|---|---|
| Energie (kcal) | 204 |
| Protéines | 3,2 |
| Glucides | 3,8 |
| Dont sucres | 0,6 |
| Lipides | 19 |
| Dont Acides Gras Saturés | 1,76 |
| Fibres | 1,5 |

**Exemple 3** : le produit de type crème est composé de 69,2% eau, 18% purée d'amandes, 9% huile de colza, 1% fécule de pomme de terre, 1,5% jus de citron concentré, 1,1% d'inuline, 0,2% arôme naturel.

(A) -B-C-D-G-H

### Exemple 4 : Tests culinaires de crèmes végétales selon l'invention

La crème selon l'exemple 1 a été utilisée avec succès pour différentes applications telles qu'une sauce aux champignons, sur une tarte chaude aux fruits (figure 1), et sur une pizza avant cuisson au four (figure 2, prise après cuisson). On note dans tous cas une excellente tenue après cuisson, meilleure qu'une crème laitière, qui elle, aurait tendance à se liquéfier.

### Exemple 5 :

Dans l'exemple suivant, la purée d'amandes additionnée d'eau, a été inoculée et fermentée par une souche de l'espèce *Lactococcus lactis ssp lactis biovar diacetylactis.* Le mélange obtenu a été fermenté à 30°C pendant 24h afin d'obtenir ce qui sera appelé un levain.

Le levain est ensuite incorporé lors de l'étape B) à hauteur de 30% dans le mélange final. Un produit sans levain a également été réalisé à titre de comparaison. La composition des deux produits est équivalente et se résume dans le tableau 5 suivant :

**Tableau 5**

| **Ingrédients** | **Produit avec incorporation de 30% de levain** | **Produit sans incorporation de levain** |
|---|---|---|
| Purée d'amandes | 10,5% | 15% |
| Levain fermenté (15% purée d'amandes + 85% eau) | 30% | 0 |
| **Purée d'amandes totale** | **15%** | **15%** |
| Huile de colza | 10% | 10% |
| fécule de pomme de terre | 0,5 | 0,5 |
| Inuline | 1% | 1% |
| Jus de citron | 1,3% | 1,3% |
| Eau | 46,7% | 72,2% |

Le procédé mis en œuvre est celui de l'Exemple 1.

Les deux produits ont été réalisés le même jour. Lors de la dégustation, l'essai fermenté est ressorti significativement plus gourmand du témoin avec des notes de crèmes bien marquées et un profil organoleptique alors très proche d'une crème laitière.

### Exemple 6 :

Une évaluation sensorielle a été menée sur un des exemples de l'invention (le produit de l'exemple 2) en comparaison à une crème laitière du commerce.

L'évaluation s'est déroulée en comparatif, sur des produits présentés de façon anonyme à l'aide de code à 3 chiffres.

Le jury était constitué de 8 participants entraînés à la méthode descriptive (Profil sensoriel / QDA *Quantitive Descriptive Analysis*) et à l'évaluation de produits laitiers et végétaux.

Une dizaine de descripteurs de texture ou d'aspect ont été évalués, parmi lesquels : brillance, exsudation, fermeté, humidité, impression de gras, fondant/dispersant, pâteux/collant

Les produits étaient notés sur une échelle continue en 10 points

Les profils sensoriels des produits sont présentés sous forme de graphique radar.

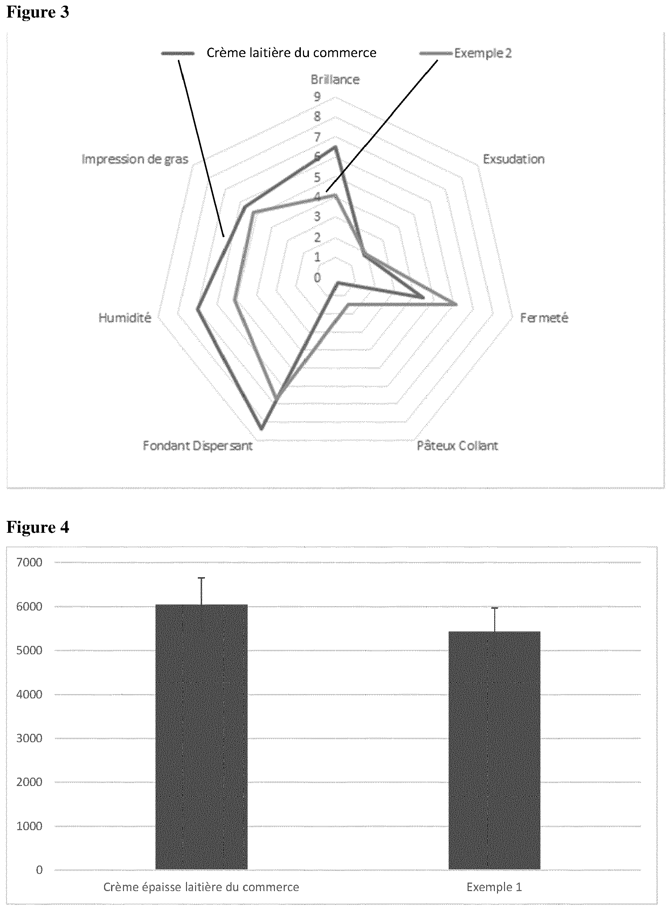

Ce graphique (figure 3) met bien en évidence la proximité de la crème de l'invention face à une crème laitière.

### Exemple 7 :

Des mesures de viscosité à 4°C ont été réalisées sur un des exemples de l'invention (exemple 1) en comparaison à une crème épaisse laitière du commerce.

Les mesures sont réalisées à l'aide d'un rhéomètre équipé d'une géométrie cône plan de 2 degrés d'angle et 50 mm de diamètre. Un millilitre d'échantillon est déposé et la valeur de viscosité est relevée après 2 minutes sous cisaillement à 10s⁻¹.

Les résultats sont présentés dans le diagramme de la figure 4. La viscosité du produit issu de l'invention est proche de la viscosité d'une crème épaisse laitière du commerce.

La viscosité du produit de l'invention peut être modulée selon les besoins en ajustant les paramètres de formulation et de procédé de fabrication.

## Revendications

1. Produit alimentaire végétal analogue à une crème laitière, comprenant :
- des fruits à coque broyés, de préférence sous forme de purée ;
additionnés de :
- au moins une matière grasse végétale ;
- au moins une source d'amidon ;
- au moins un ingrédient naturel acidifiant
- optionnellement, au moins une source de fibres alimentaires végétales ; et
- de l'eau ;
**caractérisé en ce qu'**il ne contient aucun additif ajouté.

2. Produit alimentaire végétal selon la revendication 1, lequel a une teneur en protéines supérieure à 3,5%, ledit produit alimentaire contenant en particulier entre 3,5 et 6% de protéines, et plus préférentiellement entre 3,5 et 5%, 4 et 6%, ou 4 et 5% de protéines.

3. Produit alimentaire végétal selon la revendication 1 ou 2 ne comprenant pas de concentrat et/ou d'isolat de protéines.

4. Produit alimentaire végétal selon l'une quelconque des revendications précédentes, comprenant :
- des fruits à coques broyés, de préférence sous forme de purée et de préférence de la purée d'amandes ;
additionnés de :
- au moins une matière grasse végétale choisie parmi les huiles végétales liquides à 20°C, en particulier parmi l'huile de colza, l'huile de tournesol, l'huile d'olive, l'huile de pépins de raisin, l'huile de lin, l'huile de chanvre et leurs mélanges, notamment l'huile de colza ;
- au moins une source d'amidon ;
- au moins un ingrédient naturel acidifiant ;
- optionnellement, des ferments ;
- au moins une source de fibres alimentaires végétales, notamment choisie parmi les fibres solubles, telles que fibres de chicorée, dextrines résistantes et psyllium ou autres fibres mucilagineuses telles que des fibres de graines de lin ou de chia, et leurs mélanges; et
- de l'eau.

5. Produit alimentaire végétal selon l'une quelconque des revendications précédentes, comprenant :
- des fruits à coques broyés, de préférence sous forme de purée et de préférence de la purée d'amandes ;
additionnés de :
- au moins une matière grasse végétale ;
- au moins une source d'amidon ;
- au moins un ingrédient naturel acidifiant ;
- des ferments ;
- optionnellement, au moins une source de fibres alimentaires végétales ; et
- de l'eau.

6. Produit alimentaire végétal selon l'une quelconque des revendications précédentes ne comprenant pas de soja.

7. Produit alimentaire végétal selon la revendication 1, **caractérisé en ce qu'**il comprend (pourcentages exprimés en poids par rapport au poids total du produit) :
- de 5 à 30% de purée de fruits à coques broyées ;
- de 5 à 40% de matière grasse végétale ;
- de 0,5% à 10% d'une source d'amidon ;
- jusqu'à 30% d'autres matières premières telles que purées ou morceaux de légumes ou de fruits, céréales, graines, arômes, aliments colorants, sucres, poudre de Lithothamne ou herbes ;
- jusqu'à 8% de fibres alimentaires végétales ;
- optionnellement, une source naturelle de calcium, de préférence de type Lithothamne, notamment à une teneur comprise entre 0,5 et 1% ;
- jusqu'à 3,5% d'acidifiant de type jus de citron concentré ;
- jusqu'à 1,5% de sel alimentaire ;
- optionnellement, jusqu'à 1% de ferments ;
- de l'eau, entre 50% et 75%.

8. Produit alimentaire végétal selon l'une quelconque des revendications précédentes, **caractérisé par** :
- une teneur en extrait sec comprise entre 20 et 50%, préférentiellement entre 25 et 40% ;
- un pH compris entre 4,0 et 5,2 ;
- des caractéristiques d'un produit laitier frais, en particulier la couleur blanche, l'aspect lisse, la texture très lisse et dispersante en bouche, de liquide à épaisse selon le type de crème voulue et un goût frais à fermenté/acide.

9. Produit alimentaire végétal selon l'une quelconque des revendications précédentes, **caractérisé en ce que** le fruit à coque est l'amande.

10. Produit alimentaire végétal selon l'une quelconque des revendications précédentes, **caractérisé en ce que** la matière grasse végétale est une huile végétale liquide à 20°C.

11. Produit alimentaire végétal selon la revendication 10, **caractérisé en ce que** l'huile végétale liquide à 20°C est choisie parmi l'huile de colza, de tournesol ou d'olive ou leur mélange.

12. Produit alimentaire végétal selon l'une quelconque des revendications précédentes, **caractérisé en ce que** la source d'amidon est une farine de riz et/ou une fécule de pomme de terre ou de manioc.

13. Produit alimentaire végétal selon la revendication 12, **caractérisé en ce que** la farine de riz est prégélatinisée.

14. Produit alimentaire végétal selon l'une quelconque des revendications précédentes, **caractérisé en ce que** les fibres alimentaires végétales sont choisies parmi les fibres solubles, telles que fibres de chicorée, dextrines résistantes et psyllium ou autres fibres mucilagineuses telles que des fibres de graines de lin ou de chia, et leurs mélanges.

15. Procédé de préparation du produit selon l'une quelconque des revendications 1 à 14, comprenant les étapes suivantes :
A) optionnellement, préparation d'une matière première végétale fermentée par fermentation d'une partie ou de la totalité de fruits à coque broyés, sous leur forme réhydratée et traité thermiquement préalablement à l'inoculation des ferments ;
B) mélange des matières premières, pouvant comprendre la matière première végétale fermentée obtenue à l'étape A), via un cisaillement énergique, et, optionnellement, préchauffage ;
C) traitement thermique du mélange à une température comprise entre 75 et 140°C, par exemple par double paroi ou injection de vapeur ;
D) dégazage optionnel et homogénéisation ;
E) optionnellement, ajout de matières premières de préférence végétales ;
les étapes E) et F) peuvent être inversées ;
F) dosage du produit fini ;
G) optionnellement, refroidissement entre 4 et 10°C ;
H) optionnellement dans le cas d'un dosage dans un containeur intermédiaire, ajout d'autres matières premières de préférence végétales aromatisantes ou colorantes et/ou de ferments puis dosage à froid du produit dans son emballage final.
